(19) **Europäisches Patentamt / European Patent Office / Office européen des brevets**

(11) **EP 3 039 898 B1**

(12) **EUROPEAN PATENT SPECIFICATION**

(45) Date of publication and mention
of the grant of the patent:
**30.05.2018 Bulletin 2018/22**

(21) Application number: **13756138.7**

(22) Date of filing: **30.08.2013**

(51) Int Cl.:
*H04W 28/06* (2009.01)     *H04L 29/06* (2006.01)
*H04L 12/851* (2013.01)

(86) International application number:
**PCT/EP2013/068004**

(87) International publication number:
**WO 2015/028087 (05.03.2015 Gazette 2015/09)**

(54) **MITIGATION OF SIGNALLING CONGESTION IN A WIRELESS NETWORK**

ABSCHWÄCHUNG EINER SIGNALISIERUNGSÜBERBELEGUNG IN EINEM DRAHTLOSEN NETZWERK

ATTÉNUATION DE L'ENCOMBREMENT DE SIGNALISATION DANS UN RÉSEAU SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.07.2016 Bulletin 2016/27**

(73) Proprietor: **Huawei Technologies Sweden AB
164 40 Kista (SE)**

(72) Inventors:
• **ZHOU, Chan
80992 Munich (DE)**

• **SCHULZ, Egon
80992 Munich (DE)**

(74) Representative: **Gill Jennings & Every LLP
The Broadgate Tower
20 Primrose Street
London EC2A 2ES (GB)**

(56) References cited:
**EP-A1- 1 134 900     WO-A1-00/72550
US-A- 6 061 366**

**Description**

<u>TECHNICAL FIELD</u>

The invention relates to a method and an apparatus for mitigating signalling congestion in a wireless network by reducing signalling overhead in the wireless network.

<u>BACKGROUND</u>

Mobile and wireless communication systems have been evolving in recent times rapidly. There are different types of wireless networks such as wireless personal area networks, WPAN, wireless local area networks, WLAN, or wireless mesh networks. Wireless networks include cellular networks. A cellular network is a radio network distributed over land areas called cells, each served by at least one transceiver also known as a cell site or base station.

Besides the massive data traffic growth in the wireless networks, also the number of connected mobile devices has increased significantly. With an increasing density of mobile terminal devices in the wireless network, the signalling congestion within the network increases as well which even might lead to a breakdown of the respective wireless network. Signalling congestion in a wireless network typically take place when a large number of mobile devices try to access the network in a highly synchronized manner. This happens when recurring data transmissions are generated at precisely synchronous time intervals. Further, a malfunction in an application or server requests can cause that the mobile devices keep sending their data. A further cause for signalling congestions can be, if an event triggers high numbers of machine-to-machine, M2M, devices to attach to the network at gestions can be, if an event triggers high numbers of machine-to-machine, M2M, devices to attach to the network at the same time. This can, for example, happen, if metering or sensor devices become simultaneously active after a power cut. Further, signalling congestions can occur when devices are simultaneously handed over to another base station, which might be caused by a highly synchronized mobility or by a base station outage.

In a wireless communication system, the base station and mobile devices communicate with each other by signalling messages. In those scenarios, where signalling congestion does take place, there is a high coincidence between the signalling information sent by the devices and carried in signalling messages, in particular in scenarios where the devices sending the signalling messages belong to similar types or serve a similar purpose or when the devices are located in a proximate area.

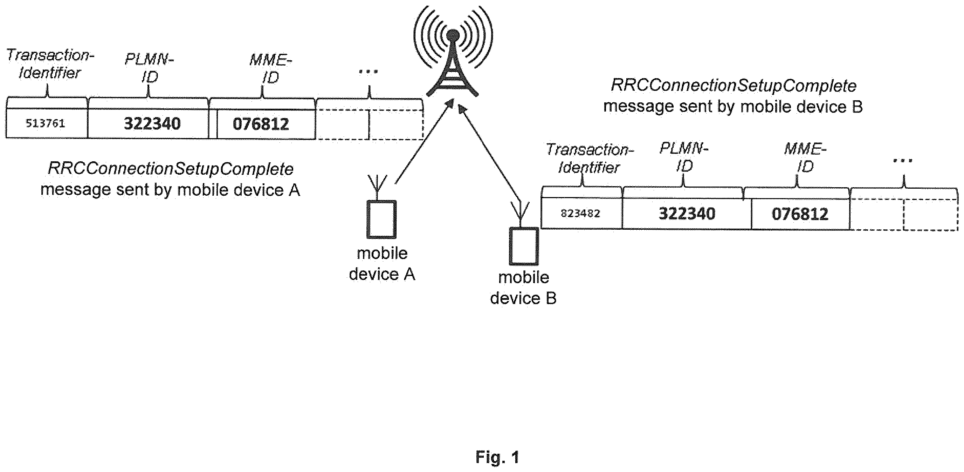

Fig. 1 shows an exemplary diagram for illustrating signalling messages sent by two mobile devices in a conventional 3GPP Long Term Evolution, LTE, system. In the shown example, a mobile device A and a mobile device B send a RRCConnectionSetupComplete message to a base station of the network. As illustrated in Fig. 1, the RRCConnectionSetupComplete message consists of sections such as a Public Land Mobile Network Identity, PLMN-ID, and Mobility Management Entity Identity, MME-ID, which are usually the same for proximate and content-related mobile devices. As can be seen from the example in Fig. 1, the message sections PLMN-ID and MME-ID sent by the mobile devices A and B to the base station, BS, are redundant.

In the example of Fig. 1, the signalling messages are sent in uplink direction from the mobile devices A, B to the base station BS. Signalling messages can also be transmitted in both uplink and downlink direction, that is to say, from the mobile devices to the base station and also from the base station to the mobile devices in its vicinity. Mobile devices such as the mobile devices A and B shown in Fig. 1 have the capability to receive signalling messages from the base station and to transmit signalling messages to the base station. Also, the base station is adapted to transmit and receive signalling messages from/to one or multiple mobile devices.

Accordingly, signalling messages are transmitted on a signalling channel between at least one base station and mobile devices. Signalling messages exchanged between base stations and mobile devices occupy bandwidth and can cause signalling congestions in the wireless network.

Conventional approaches to reduce the signalling congestions either operate by blocking or dropping non-urgent signalling requests or perform a batch signalling handling.

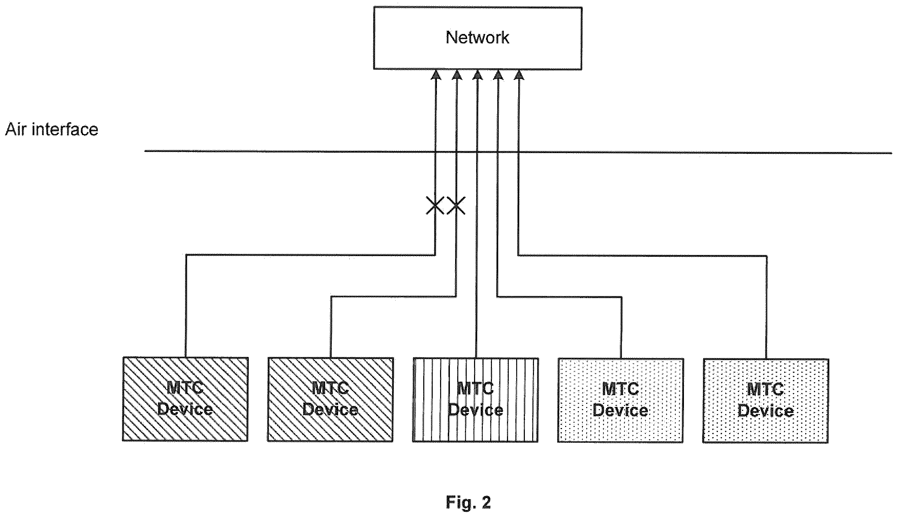

Fig. 2 shows a block diagram for illustrating a conventional approach to reduce signalling congestion by blocking or dropping non-urgent signalling requests. In this approach, priority classes are defined for all kinds of applications. In such a conventional system as illustrated in Fig. 2, low priority signalling requests are blocked or dropped in order to guarantee fast transmission of high priority requests. The drawback of this conventional approach is that because not all requests can be responded in time, low priority signalling requests have to endure a long delay or are completely neglected. Fig. 2 shows an example with Machine Type Communi-devices being located on the left side, one sensor device being located in the middle, and two actuator devices being located on the right side of the arrangement disclosed in Fig. 2, respectively, wherein the two user equipment devices have the lowest priority and their signalling requests are blocked.

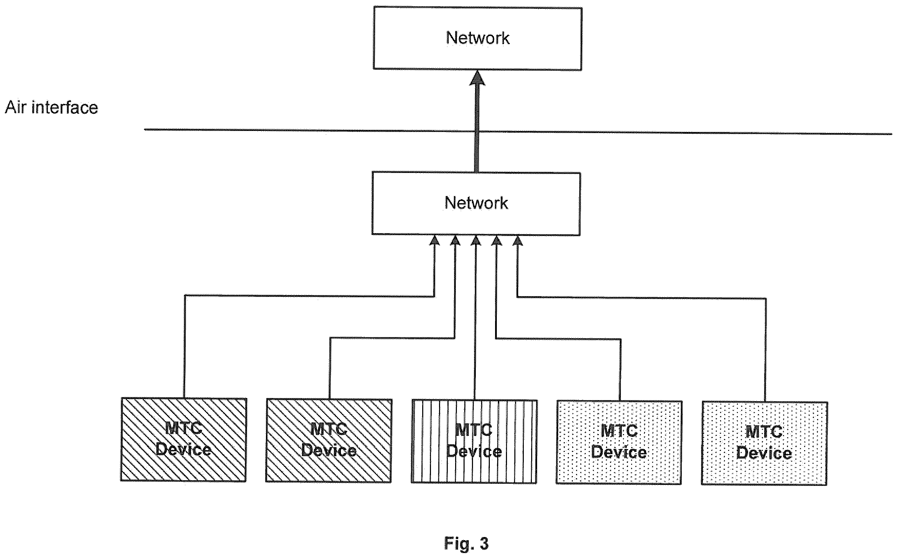

Fig. 3 shows a block diagram for illustrating another approach to reduce the signalling congestion by batch signalling handling. As shown in Fig. 3, MTC devices similar to Fig. 2 are connected to a gateway which is linked to a network via an air interface. By batch signalling handling, similar signalling messages are grouped and handled together. The drawback of this conventional approach is that an additional delay is introduced by the aggregation of the signalling messages. Furthermore, signals from each device have to be aggregated at a central entity, such as a gateway. Therefore, this conventional mechanism is only suitable for M2M area networks where centralized signalling processing is possible.

EP1134900A1 discloses that a method and apparatus for compressing packets that enables inter-packet compression thereby achieving greater robustness and increased compression ratios without the deleterious effects, e.g., the effect of packet loss multiplying, of prior compression schemes. More particularly, a so-called acknowledgment scheme is employed in conjunction with the specific compression algorithm such that the transmitter, i.e., sender, can limit the history used by the compression algorithm to those packets that are correctly received. In particular, a vector identifying the packets used as the history is included in the compressed packet thereby enabling the receiver to reconstruct the packet history state necessary to decompress the packet. Advantageously, increased robustness and greater compression ratios are achieved independent of any particular one compression scheme.

WO0072550A1 discloses a communication system and method in an IP network, which deals with the problem with packet based services consuming considerable bandwidth over links with shortage of bandwidth. The object of the present invention is to reduce the amount of information when transferring a signalling message and thus save bandwidth. After receiving a signalling message in a first node the signalling message is identified. The signalling message is replaced by an indicator, under usage of information from the identification, which indicator is transferred to a second node. The second node restores the signalling message using the indicator.

US6061366A discloses that a transmitting device, receiving device, packet transmission system and packet signal transmission method for efficient data compression when the contents of the control fields of packets are the same. An identity flag is substituted for a control field when the control field of an already-transmitted packet signal is identical to the control field of a packet signal which is to be newly transmitted. When non-identical, a non-identity flag is inserted to the control field. Thus, by using a larger number of small data format when identical control fields are transmitted consecutively, the data length of the control fields can be shortened.

## SUMMARY

Accordingly, it is an object of the present invention to provide a method and an apparatus for mitigating signalling congestion in a wireless network which overcome the above-mentioned drawbacks and which effectively mitigate a signalling congestion in a wireless network without increasing significantly the technical complexity of the wireless network infrastructure.

According to a first aspect of the present invention, a method for mitigating signalling congestion in a wireless network is provided, comprising the method steps of:

building up a dictionary of collected signalling messages, the signalling messages being used as reference signalling messages in a wireless network without increasing significantly the technical complexity of the wireless network infrastructure.

According to a first aspect of the present invention, a method for mitigating signalling congestion in a wireless network is provided as per claim 1. In the method according to the first aspect of the present invention, the built-up dictionary of collected signalling messages can form a database which is available to the associated mobile devices and the base station. To built-up this dictionary database, signalling messages are collected to be used as reference signalling messages. These collected signalling messages are referred to as reference signalling messages.

The method according to the first aspect of the present invention can achieve the advantage that a signalling congestion can be effectively mitigated by increasing an available signalling bandwidth of the wireless network with a resilient and robust mechanism, allowing an implementation based on an already existing network infrastructure without increasing its complexity.

This aspect can have the advantage that the dictionaries in the base station and in the listing mobile device can be built-up in parallel at the same time.

In a first implementation form of the method according to the first aspect, the signalling messages are compressed on a transmitter side based on the dictionary of the collected reference signalling messages; and the signalling messages are reconstructed on a receiver side based on the dictionary of the collected reference signalling messages.

In a second implementation form of the method according to the first aspect as such or according to the first implementation form of the first aspect, the reference signalling messages are collected within a predetermined time period and indexed.

This time period can be adjustable. It is possible that the time period is predefined or even dynamically adjusted to maximize the performance of the wireless network.

In a third implementation form of the method according to the second implementation form of the first aspect, the collected reference signalling messages are indexed according to a transmission order of the reference signalling messages or according to time stamps of the reference signalling messages, each time stamp indicating a time when the respective reference signalling message has been transmitted.

In a fourth implementation form of the method according to the first aspect as such or according to any of the preceding implementation forms of the first aspect, the dictionary of the collected reference signalling messages comprises indexed codewords being extracted from previously transmitted signalling messages, the previously transmitted signalling messages addressing a set of the associated mobile devices.

In a fifth implementation form of the method according to the first aspect as such or according to any of the preceding implementation forms of the first aspect, the associated mobile devices have a concrete relationship comprising their current location in a proximate area and/or their respective device capabilities and/or their respective service purposes.

The proximate area can be an area in the vicinity of a base station.

The device capabilities of a mobile device can comprise hardware characteristics such as a processing capability or functions implemented on the respective mobile device.

A mobile device can provide one or several specific services in a wireless network to be offered to a user.

Since mobile devices having a concrete relationship as in the fifth implementation form normally exchange signalling messages with base stations that have a high degree of similarity and/or identical signal sections a signalling overhead can be efficiently reduced.

In a sixth implementation form of the method according to the first aspect as such or according to any of the first to fifth implementation forms of the first aspect, in a downlink direction, for providing the dictionary of the collected reference signalling messages, the reference signalling messages being transmitted on a broadcast or multicast signalling channel from the base station to the associated mobile devices are received by the associated mobile devices and stored with corresponding indices both in a dictionary memory of the transmitting base station and in dictionary memories of the receiving associated mobile devices.

This implemented form can provide also the advantage that the built up dictionaries in the mobile devices do not deviate from the dictionary stored in the base station.

In a seventh implementation form of the method according to the first aspect as such or according to any of the preceding implementation forms of the first aspect, the dictionary of the collected reference signalling messages is continuously updated.

This implementation form can provide the advantage that the performance of the method can be increased.

In an example, the codewords and/or indices of the indexed reference signalling messages are calculated based on the reference signalling messages.

In another example, a source message being transmitted on the signalling channel from the base station to a mobile device in downlink direction, or transmitted from a mobile device to the base station in uplink direction, is compressed at the transmitter side by replacing codewords of the source message with indices of codewords in the corresponding indexed reference signalling messages, the indexed reference signalling messages being available in the dictionary of the collected reference signalling messages.

This implementation form can provide the advantage that the compression can be performed efficiently and that the compression can be robust and resilient against external influences.

In an example, at the receiver side the indices within the received compressed signalling messages are replaced by codewords of the corresponding indexed reference signalling messages of the dictionary of the collected reference signalling messages in order to reconstruct the original uncompressed source signalling message.

In an eighth implementation form of the method according to the first aspect, in a downlink direction from the base station to the associated mobile devices, the base station transmits compressed and uncompressed signalling messages at the same time on a broadcast or multicast signalling channel to the associated mobile devices, wherein the compressed signalling messages are compressed on the basis of the dictionary built-up from the uncompressed signalling messages.

This implementation form can provide the advantage that the dictionary must not be stored in a dictionary message of the mobile device.

In a ninth implementation form of the method according to the eighth implementation form of the first aspect, the signalling messages are compressed at the transmitter side using the uncompressed signalling messages as a reference and transmitted as compressed signalling messages to the associated mobile devices, wherein the compressed signalling messages received by the associated mobile devices are decompressed at the receiver side using the received uncompressed signalling messages as a reference.

According to a second aspect of the present invention, a mobile device is provided according to claim 11.

Based on at least the above-mentioned aspects and implementation forms the following advantages can be achieved by the present invention:

Signalling congestions in a network typically take place when a large amount of devices try to access the network in a highly synchronized manner. With the method according to the present invention, signalling congestion in a wireless network can be avoided. The method according to the present invention can allow a lossless and timeliness communication in the wireless network. The communication can be lossless, because all signalling messages can be received properly, both in uplink and in downlink direction. Moreover, timeliness can be achieved, because the signalling messages can be received with a very low delay. Accordingly, the method of the present invention can effectively reduce the signalling overhead without causing information loss or causing additional processing delay. It can effectively mitigate any signalling congestion in the wireless network and stored in a dictionary memory of the base station and in a dictionary memory of each associated mobile device.

According to a third aspect of the present invention, a base station of a wireless network is provided, the base station being adapted to compress signalling messages transmitted by the base station on a signalling channel to mobile devices, the mobile devices being associated with each other, based on a built-up dictionary of collected signalling messages, the collected signalling messages being used as collected reference signalling messages, and the signalling messages being transmitted on a signalling channel between the base station and the associated mobile devices, wherein the dictionary is available to all of the associated mobile devices and the base station.

In a first implementation form of the base station according to the third aspect of the present invention, the base station comprises a signalling message generation unit being adapted to generate signalling messages, and a signalling message compression/decompression unit being adapted to compress signalling messages generated by the signalling message generation unit, based on a built-up dictionary of the collected reference signalling messages, in order to provide compressed signalling messages transmitted by a transmission unit of the base station on the signalling channel to the associated mobile devices, and the signalling message compression/decompression unit being further adapted to decompress compressed signalling messages received by a reception unit of the base station from mobile devices, based on the built-up dictionary of the collected reference signalling messages, in order to provide decompressed signalling messages.

In a second implementation form of the base station according to the first implementation form of the third aspect, the base station comprises a dictionary memory being adapted to store the built-up dictionary of the collected reference signalling messages.

In a third implementation form of the second implementation form of the base station according to the third aspect, the dictionary memory of the base station comprises a downlink dictionary memory storing downlink signalling messages generated by the signalling message generation unit of the base station, and an uplink dictionary memory storing uplink signalling messages received by the reception unit of the base station.

According to a fourth aspect of the present invention, a mobile device of a wireless network is provided, the mobile device being adapted to compress signalling messages being transmitted by the mobile device to a base station on a signalling channel, based on a built-up dictionary of collected signalling messages, the collected signalling messages being used as collected reference signalling messages, and the signalling messages being transmitted on a signalling channel between the base station and the mobile device, wherein the built-up dictionary of the collected reference signalling messages is available to the mobile device and the base station.

In a first implementation form of the mobile device according to the fourth aspect of the present invention, the mobile device comprises a signalling message generation unit being adapted to generate signalling messages, and a signalling message compression/decompression unit being adapted to compress signalling messages generated by the signalling message generation unit, based on the built-up dictionary of the collected reference signalling messages, in order to provide compressed signalling messages transmitted by a transmission unit of the mobile device on the signalling channel to the base station, and being further adapted to decompress compressed signalling messages received by a reception unit of the mobile device from the base station, based on the built-up dictionary of the collected reference signalling messages, in order to provide decompressed signalling messages.

In a second implementation form of the mobile device according to the first implementation form of the fourth aspect, the mobile device comprises a dictionary memory being adapted to store the built-up dictionary of the collected reference signalling messages.

In a third implementation form of the mobile device according to the second implementation form of the fourth aspect, the dictionary memory of the mobile device comprises a downlink dictionary memory storing downlink signalling messages being received by a reception unit of the mobile device, and an uplink dictionary memory storing uplink signalling messages generated by the signalling message generation unit of the mobile device.

In a fourth implementation form of the mobile device according to the fourth aspect as such or according to any of the preceding implementation forms of the fourth aspect, the mobile device comprises a user equipment, a sensor device and/or an actuator device.

Based on at least the above-mentioned aspects and implementation forms the following advantages can be achieved by the present invention:

Signalling congestions in a network typically take place when a large amount of devices try to access the network in a highly synchronized manner. With the method according to the present invention, signalling congestion in a wireless network can be avoided. The method according to the present invention can allow a lossless and timeliness communication in the wireless network. The communication can be lossless, because all signalling messages can be received properly, both in uplink and in downlink direction. Moreover, timeliness can be achieved, because the signalling messages can be received with a very low delay. Accordingly, the method of the present invention can effectively reduce the signalling overhead without causing information loss or causing additional processing delay. It can effectively mitigate any signalling congestion in the wireless network and can increase the bandwidth and capacity of the network. The applied method according to the present invention can be resilient and robust, and may not increase the technical complexity of already existing wireless networks. The method can be moreover compatible with the existing infrastructure of wireless networks.

With the method according to the present invention, the original signalling message can be translated into a shorter signalling message based on the built-up dictionary. The method can meet the criteria of reliability and timeliness. The compression can be performed lossless and the compression process may not cause an additional latency in the signalling process.

BRIEF DESCRIPTION OF DRAWINGS

In the following, possible embodiments of the present invention are described with reference to the enclosed figures in more detail.

Fig. 1 illustrates signalling messages transmitted in a conventional wireless communication system for illustrating a problem underlying the present invention;

Fig. 2 shows a block diagram for illustrating a conventional approach to reduce signalling congestion in a wireless communication system;

Fig. 3 shows a block diagram for illustrating another conventional approach to reduce signalling congestion in a wireless communication system;

Fig. 4 shows a schematic block diagram for illustrating a wireless network according to an embodiment of the present invention;

Fig. 5 shows a flowchart for illustrating an exemplary embodiment of a method according to the present invention;

Fig. 6 shows a block diagram of an exemplary embodiment of a base station according to the present invention;

Fig. 7 shows a block diagram of an exemplary embodiment of a mobile device according to the present invention;

Figs. 8A,8B show signal diagrams for illustrating a signalling compression scheme as employed in a conventional wireless network, and in a wireless network according to an embodiment of the present invention;

Fig. 9 shows a diagram for illustrating a method according to an embodiment of the present invention;

Fig. 10 shows an example of a dictionary as employed by the present invention;

Figs. 11A,11B show diagrams for illustrating the operation according to an embodiment of the present invention;

Fig. 12 shows an exemplary diagram to illustrate the operation of the present invention;

Fig. 13 shows the data structure of an exemplary message after signal compression, using the method according to the present invention; and

Fig. 14 shows a further diagram for illustrating an embodiment of the present invention.

DETAILED DESCRIPTION OF EMBODIMENTS

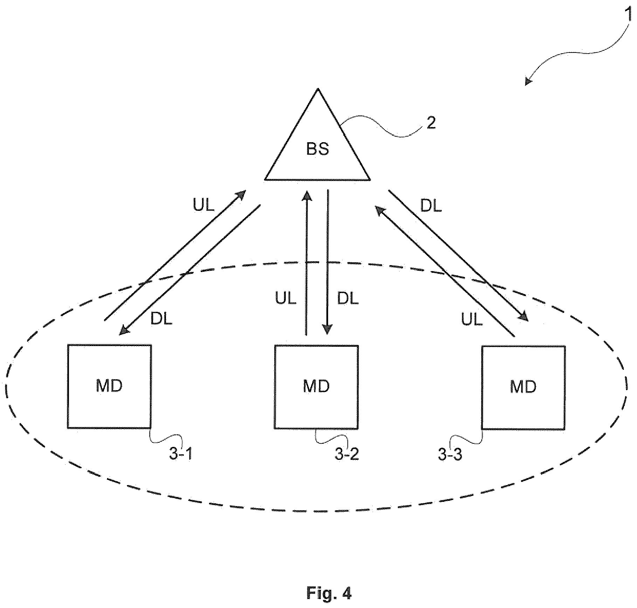

As can be seen in the block diagram of Fig. 4, a wireless network 1 according to an embodiment of the present invention comprises at least one base station 2 and mobile devices, MDs, 3-1, 3-2 and 3-3. A mobile device 3-i is any mobile device of a group of associated mobile devices. In the example of Fig. 4 the group of associated mobile devices comprises three mobile devices 3-1, 3-2 and 3-3. A mobile device 3-i can be located in a fixed position or can move around in the vicinity of a base station 2. For instance a mobile device 3-i can be a user equipment, UE, being moveable. A mobile device can also be formed by sensor or actuator devices placed at a fixed position in the range of a base station 2. In the diagram of Fig. 4, three mobile devices 3-1, 3-2 and 3-3 are linked via an air interface to the base station 2 of the wireless network 1. Messages including signalling messages are transmitted via the air link from the base station 2 to the mobile devices 3-1, 3-2 and 3-3, in a downlink, DL, direction and from the mobile devices 3-1, 3-2 and 3-3 to the base station 2 in an uplink, UL, direction. Several base stations 2 can be connected to each other via a backbone interface such as an X2 interface. It is possible that the base stations 2 transfer or exchange dictionaries built up of collected reference signalling messages.

As illustrated by a dashed line in Fig. 4, the mobile devices 3-1, 3-2 and 3-3 are associated with each other. This means that the associated mobile devices have a concrete relationship. This relationship can be a current location in a proximate area of the base station 2 and/or the device capabilities of the respective mobile devices and/or the respective service purposes of the mobile devices in the wireless network 1. There may be other associations between the mobile devices as well. Accordingly, the different mobile devices have something in common which causes the signalling information carried in their signalling messages to be similar to some extent. Signalling messages sent from the base station 2 in downlink, DL, direction or to the base station 2 in uplink, UL, direction can comprise one or several sections. Because of the association between the mobile devices, some message sections of these signalling messages exchanged between the base station 2 and the associated mobile devices can be identical and consequently can be redundant.

The signalling messages in the uplink, UL, direction from the mobile devices to the base station 2 can be transmitted either via an unscheduled channel such as a random access channel or in a scheduled channel, for instance, in an uplink shared channel. The signalling messages transmitted by the base station 2 in downlink, DL, direction are transmitted either in a broadcast channel, a shared channel, or a dedicated channel. The request for signalling can be either initiated by one of the base stations 2 or by one of the mobile devices, 3-i, of the system. In the wireless network 1, the signalling messages transmitted between the base station 2 and the associated mobile devices are compressed based on a built-up dictionary of collected signalling messages. The collected signalling messages are used as collected reference signalling messages. The signalling messages, which are collected as reference signalling messages in the dictionary, are transmitted on at least one signalling channel between the base station 2 and the mobile devices 3-1, 3-2 and 3-3. The built-up dictionary is available to the associated mobile devices 3-1, 3-2 and 3-3, and to the base station 2 of the wireless network 1.

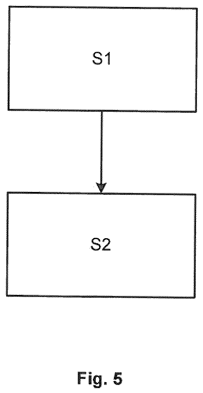

Fig. 5 shows a flowchart of an embodiment of a method for mitigating signalling congestion in the wireless network 1.

As can be seen in Fig. 5, in a first step S1, a dictionary of collected signalling messages is built up, wherein the signalling messages are used as reference signalling messages. The signalling messages are transmitted in the wireless network on a signalling channel between at least one base station and the mobile devices, wherein the mobile devices are associated with each other. The built-up dictionary is available to the associated mobile devices as well as to the base station.

In a further step S2, signalling messages transmitted on the signalling channel between the base station and the associated mobile devices are compressed based on the dictionary of the collected reference signalling messages.

Accordingly, the method of the present invention comprises two phases, i.e. a first phase to build up the dictionary for signalling messages and as a second phase to compress new signalling messages in the wireless network. To build up the dictionary, the signalling messages previously transmitted in the signalling channel are collected and can be stored in a dictionary memory. The built-up dictionary is available both at the side of the mobile devices and at the side of the base station. According to an embodiment, each mobile device and base station has a dictionary memory to save the built-up dictionary. In the compression phase, an original signalling message is translated and compressed into a shorter signalling message based on the dictionary. After receiving the shorter compressed signalling message from a transmitter, a receiver uses the same built-up dictionary to regain the original uncompressed signalling message.

The mechanism illustrated in Fig. 5 can be applied to an uplink signalling channel and to a downlink signalling channel.

With the method according to the illustrated embodiment, the signalling messages are compressed on a transmitter side based on the dictionary of collected reference signalling messages and then reconstructed on a receiver side based on the dictionary of collected reference signalling messages.

According to an embodiment, reference signalling messages can be collected within a predetermined time period and indexed. It is possible that the collected reference signalling messages are indexed according to a transmission order of the reference signalling messages. In an alternative embodiment, the collected reference signalling messages are indexed according to time stamps of the signalling messages, wherein each time stamp can indicate a time when the respective signalling message have been transmitted on the signalling channel. The dictionary of collected reference signalling messages can comprise indexed codewords which are extracted from previously transmitted signalling messages. The previously transmitted signalling messages address a set of the associated mobile devices. The associated mobile devices have a concrete relationship with each other, comprising for instance their current location, a proximate area, e.g. being in the vicinity of a specific base station or reference location, and/or their respective device capabilities and/or their respective service purposes.

According to an embodiment, in the first step S1, a dictionary made up of codewords and indices is compiled which is later used to compose the new signalling messages. The codewords can be extracted from the previous signalling messages addressing a set of associated mobile devices. These mobile devices are considered to have a certain relationship. Accordingly, these mobile devices have a high probability to provide similar signalling requests or signalling messages within the same time period.

For signalling messages in the uplink direction, i.e. from the mobile device to the base station there are different approaches for the mobile device to collect and store signals, in particular signalling messages sent from the other mobile devices.

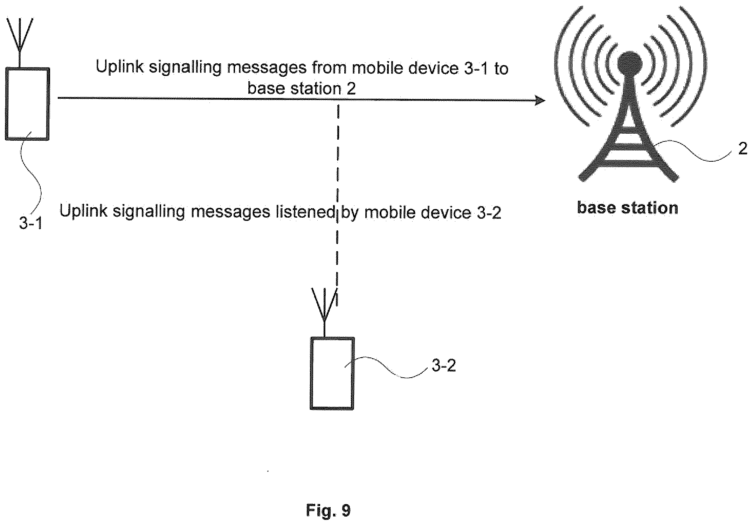

One possible approach is, as illustrated in Fig. 9, that an associated mobile device 3-2 of a group of associated mobile devices (according to this approach: 3-1 and 3-2), listens to the uplink signalling channel between the associated mobile device 3-1 and the base station 2. In this embodiment, each mobile device has the additional capability to receive the messages or signals sent by other mobile devices. The acquired signalling message of mobile device 3-1 can then be stored in a memory of the listening mobile device 3-2 together with an index which unambiguously indicates the respective signalling message.

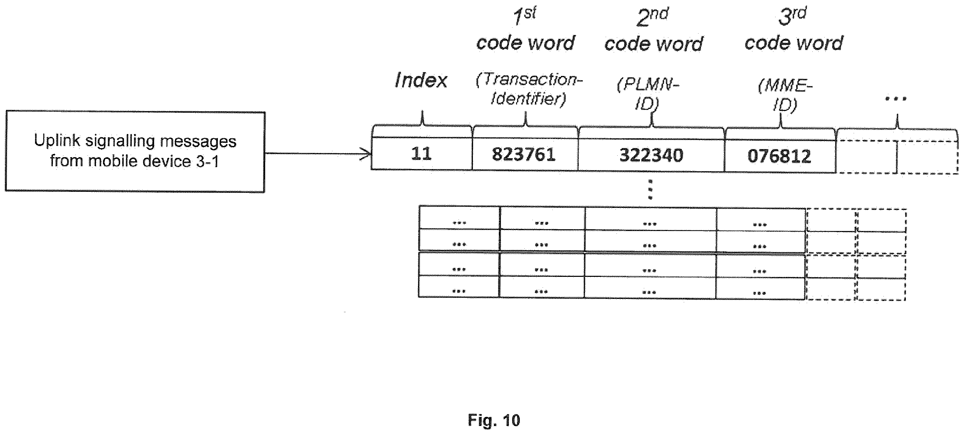

Fig. 10 shows an exemplary table of a built-up dictionary stored in a memory of the listening mobile device. For instance, in the case that mobile device 3-1 does send a "RRCConnectionSetupComplete" signalling message to the base station 2, the signalling message consists in the illustrated example of digits "823761" (transaction identifier), "322340" (PLMN-ID) and "076812" (MME-ID). The other mobile device 3-2 does listen to the uplink signalling messages of the first mobile device 3-1 transmitted in uplink direction on the signalling channel from the first mobile device 3-1 to the base station 2. The receiver of the mobile device 3-2 receives the transmitted signalling message which is then stored in a dictionary memory of the second mobile device 3-2, together with an index "11" denoting that it is the last signalling message sent by the first mobile device 3-1. Fig. 10 illustrates in the given example the storing of the signalling message of the first mobile device 3-1 along with the index in the dictionary memory of the second mobile device 3-2.

The indexing illustrated in Figs. 9 and 10 is only exemplary and other indexing mechanisms can be used as long as the base station 2 and the respective mobile device 3-i can obtain the same index for the same signalling message according to a common agreement. For instance, a time stamp when the signalling message has been sent can be used as an index as well. In the embodiment shown in Fig. 9, in an uplink direction, for providing the dictionary of the collected reference signalling messages, the listening associated mobile device 3-2 listens to uplink signalling messages transmitted on the signalling channel from another associated mobile device 3-1 to the base station 2, in order to store the acquired uplink signalling messages together with corresponding indices in a dictionary memory of the listening associated mobile device 3-2, wherein the base station 2 stores the same received uplink signalling messages with the same indices in a dictionary memory of the base station 2. In the embodiment shown in Fig. 9, two associated mobile devices exist, namely the listening associated mobile device 3-2, and one further associated mobile device 3-1. The above mechanism with respect to Fig. 9 works accordingly for one listening associated mobile device and at least two further associated mobile devices, wherein the listening associated mobile device listens to uplink signalling messages transmitted on the signalling channel from the further associated mobile devices to the base station.

The dictionary is built up based on the saved messages. Fig. 10 shows a simple example of a dictionary which comprises a collection of indexed signalling messages. If the number of stored signalling messages within the dictionary is large enough, entropy encoding algorithms such as Hoffmann coding or arithmetic coding based on the statistic model of the reference signalling messages can be used. The codewords and indices can be calculated based on the stored reference signalling messages. The same dictionary such as illustrated in Fig. 10 is available both at the side of the mobile device and the base station. Each device may have an individual dictionary. In this case, the base station can keep multiple dictionaries which are used for each mobile device individually.

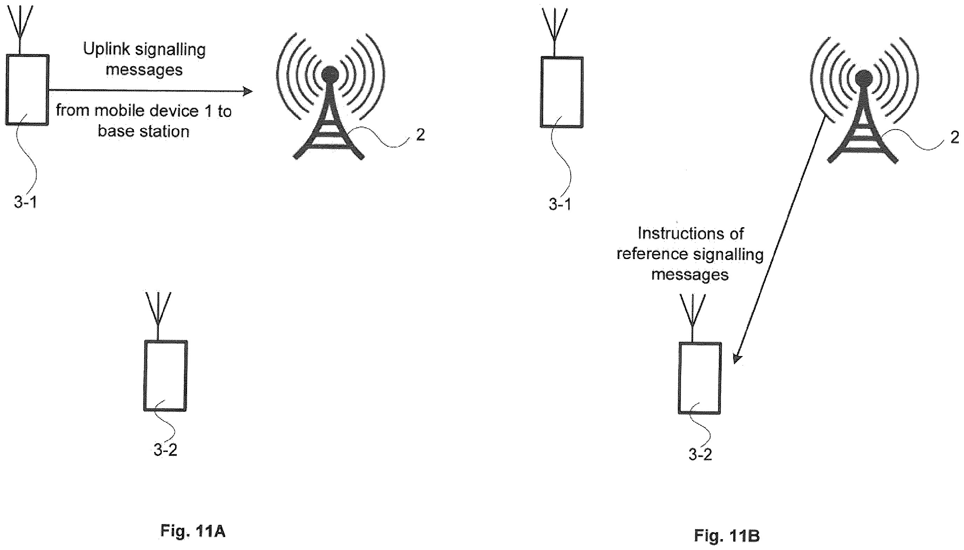

An alternative approach for the devices to collect and store signalling messages sent from other devices is illustrated in Figs. 11A and 11B. As shown in Figs. 11A and 11B, the mobile device 3-1 first sends uplink signalling messages on a signalling channel to the base station 2. Then, the base station 2 sends instructions to the associated mobile device 3-2. The mobile device 3-2 receives the instructions from the base station 2.

Generally, the instructions can comprise, according to a first variant, at least one processed signalling message or, according to a second variant, even the dictionary itself. In the first variant, the signalling messages received by the base station from the mobile device 3-1 are forwarded by the base station 2 in instructions to the mobile device 3-2. In the second variant being not disclosed in Figs. 11A and 11B, the signalling messages received by the base station 2 from the mobile devices are processed by the base station 2 to build up a dictionary, which is then broadcasted by the base station 2 in instructions to the mobile device 3-1 and the mobile device 3-2.

With regard to the above-mentioned first variant, as illustrated in Fig. 11A, in an uplink direction, for providing the dictionary of collected reference signalling messages, the uplink signalling message is first transmitted on the signalling channel from the mobile device 3-1 to the base station 2 where they are received and stored with corresponding indices in a dictionary memory of the base station 2. Then, as illustrated in Fig. 11B, the base station 2 sends instructions to the associated mobile device 3-2 being associated with the mobile device 3-1 in order to built up dictionaries for the associated mobile devices 3-1 and 3-2. The instructions can comprise representative reference signalling messages previously received by this base station 2.

In a downlink direction, i.e. from the base station to the mobile devices , signalling messages can be sent in a broadcast signalling channel or in a multicast signalling channel such that all associated mobile devices are able to receive them. Then, the signalling messages are stored both at the base station and the associated mobile devices. The dictionary can then be built up based on the stored signalling messages using the same mechanism as for the uplink signalling messages. In this embodiment, in a downlink direction for providing the dictionary of the collected reference signalling messages, the signalling messages transmitted on a broadcast or multicast signalling channel from the base station to the associated mobile devices are received by the associated mobile devices and stored with corresponding indices both in a dictionary memory of the transmitting base station and in dictionary memories of the receiving associated mobile devices.

According to an embodiment, the dictionary of the collected reference signalling messages is updated continuously. The stored signalling messages as well as the dictionary can be updated permanently. Only the signalling messages transferred within the last time period should be stored. It is possible that signalling messages sent beyond a time period are marked as outdated and can be removed from the dictionary memory. It is further possible that the dictionary is recompiled every time when the stored signalling messages are updated. The length of the time period can be a predefined value which can be adjusted to optimize the efficiency of the dictionary and the available memory size. If the adjusted time period length is large, more reference signalling messages can be stored in the dictionary and the vocabulary of the built-up dictionary can become larger. Hence, it is possible to find a longer codeword to compose the new signalling message and the compressed signalling message may be more concise. However, the length of the indices also grows with the size of the vocabulary of the built-up dictionary and ultimately increases also the length of the compressed signalling message. This trade-off can be considered by selecting the length of the time period.

In step S2 of the method illustrated in Fig. 5, a new signalling message is compressed based on the built-up dictionary. According to the available dictionary, different compression mechanisms can be applied. The applied compression mechanism can be lossless. This means that all signalling messages within the wireless network can be received properly, both in uplink and in downlink direction. Since the length of each signalling message is limited, the applied compression mechanism can be suited for short information sequences.

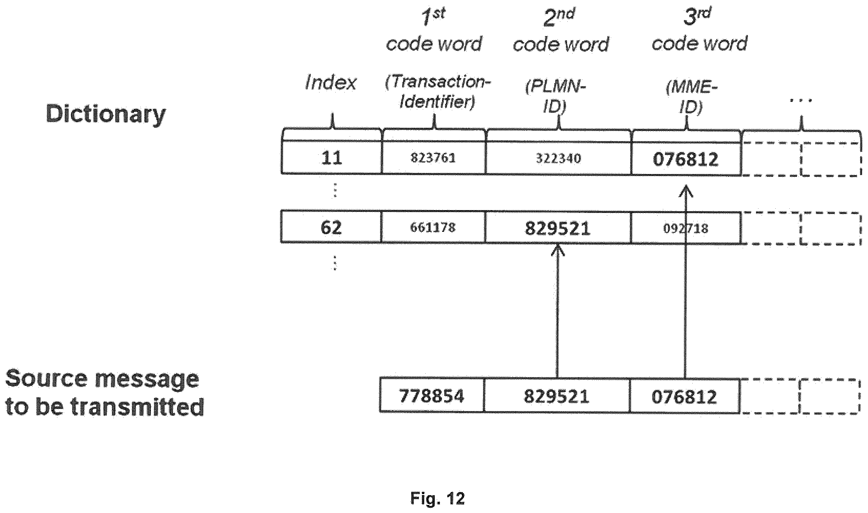

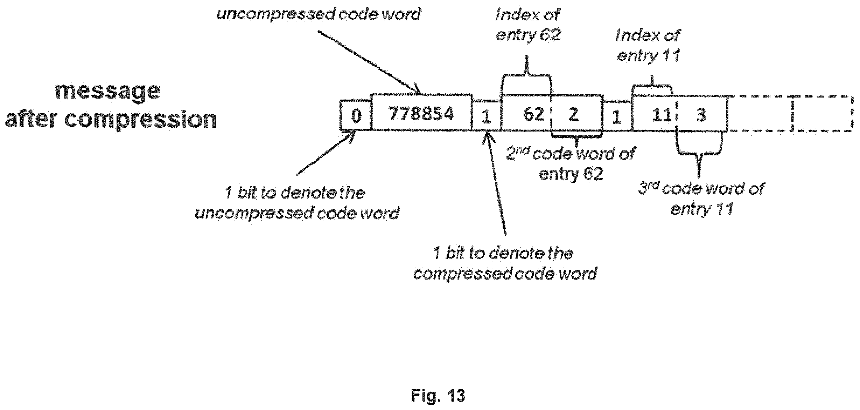

A possible approach for compressing a new signalling message is to find the same codeword in the new signalling message and to replace it with the index found in the dictionary. Figs. 12 and 13 illustrate this possible approach. In the shown example, the built-up dictionary is a collection of indexed signalling messages which can be stored in a dictionary memory. In Fig. 12 above of the shown example, a dictionary of collected reference signalling messages comprises several entries each having an index. Each indexed signalling message comprises several codewords. In the example of Fig. 12 a first codeword is formed by a transaction identifier, a second codeword is formed by a PLMN-ID and a third codeword is formed by the MME-ID of the respective indexed signalling message. The number of codewords can vary. In the specific example of Fig. 12 two indexed signalling messages having the index 11 and 62 respectively are illustrated. The first indexed signalling message with the index "11" has as a first codeword the transaction identifier "823761", as the second codeword the PLMN-ID "322340", and as the third codeword the MME-ID "076812". The second illustrated indexed signalling message with the index "62" has as the first codeword the transaction identifier "661178", as the second codeword the PLMN-ID "829521" and as the third codeword the MME-ID "092718". As shown in Fig. 12, a source message will be transmitted as a new "RRCConnectionSetupComplete" message where the first codeword is a transaction identifier "778854", which is usually unique and cannot be compressed. The second codeword of the source signalling message is the PLMN-ID "829521" and the third codeword is the MME-ID "076812". As illustrated in Fig. 12, both codewords of the source signalling message can be found in the built-up dictionary. In the illustrated example, the length of each codeword is 6 digits. The code structure of the "RRCConnectionSetupComplete" signalling message is known at the side of the mobile device 3 and the base station 2, thus it is not necessary to have additional bits to denote the start and the end of each codeword.

In the example shown in Fig. 13, after compressing the source signalling message, the compressed signalling message is composed of a first bit "0" which does denote that the transaction identifier, i.e. the first codeword, is uncompressed.

This is followed by "778854", i.e. 6 digits for the transaction identifier as the uncompressed first codeword.

A further bit "1" does denote that the following second codeword being the PLMN-ID is compressed.

This is followed by an index "62" comprising 2 digits which refer to the entry with index "62" in the built-up dictionary as illustrated in the example of Fig. 12.

The next digit "2" denotes the second codeword of entry "62".

A further bit "1" does denote that the following third codeword MME-ID is compressed.

The following 2 digits "11" refer to the entry with index "11" in the built-up dictionary.

The next digit "3" denotes a third codeword of entry "11".

Accordingly, Figs. 12 and 13 show an example for a compression mechanism which can be employed by the method according to the present invention.

Other lossless compression algorithms can also be used such as a compression mechanism based on a Lempel-Ziv algorithm. The compressed signalling message consists of the index of the reference signalling message, the position of the same message piece or section in the reference signalling message and the length of the same message piece. Alternatively, a compression mechanism such as a run-Length-Code can be applied to code the deviation between the reference signals and the source signalling message. In a possible scenario, in uplink direction, the compressed signalling messages are sent only, if a high compression rate can be achieved. Otherwise, if the achievable compression rate is low or there is no valid dictionary available, the original uncompressed signalling message can be sent. The latter case can happen when the mobile devices are just awoken from a sleep mode.

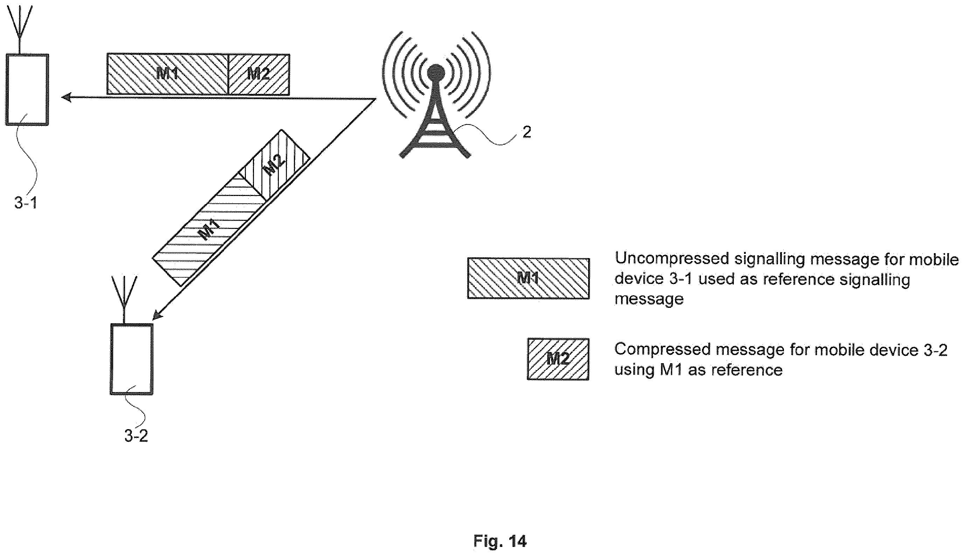

In a downlink direction, if the base station 2 wants to simultaneously transmit diverse signalling message to multiple mobile devices, a special approach can be applied. As illustrated in Fig. 14, the base station 2 can broadcast a mixture of uncompressed and compressed signalling message together at the same time. As illustrated in Fig. 14, the base station 2 transmits the signalling message to mobile device 3-1 and mobile device 3-2, which are associated with each other at the same time. M1 is an uncompressed signalling message for mobile device 3-1. It is sent in the broadcast or multicast channel and received by mobile device 3-1 and mobile device 3-2 as well. M2 is a signalling message of the base station 2 for mobile device 3-2. It is compressed based on the uncompressed signalling message for mobile device 3-1, used as a reference signalling message employing one of the compression mechanisms mentioned above. Mobile device 3-2 receives both the uncompressed signalling message M1 for mobile device 3-1 and the compressed signalling message M2 for mobile device 3-2 and decompresses the compressed signalling message M2 using the uncompressed signalling message M1 as a reference signalling message. In the embodiment illustrated in Fig. 14, in a downlink direction from the base station 2 to the associated mobile devices 3-1 and 3-2, the base station 2 transmits compressed and uncompressed signalling messages at the same time on a broadcast or multicast signalling channel to the associated mobile devices 3-1 and 3-2, wherein the compressed signalling messages are compressed on the basis of the dictionary built up so far from the uncompressed signalling messages. In the embodiment shown in Fig. 14, it is possible that the built-up dictionary can be stored, however, it is not necessary.

The wireless network can comprise a plurality of base stations and a plurality of mobile devices.

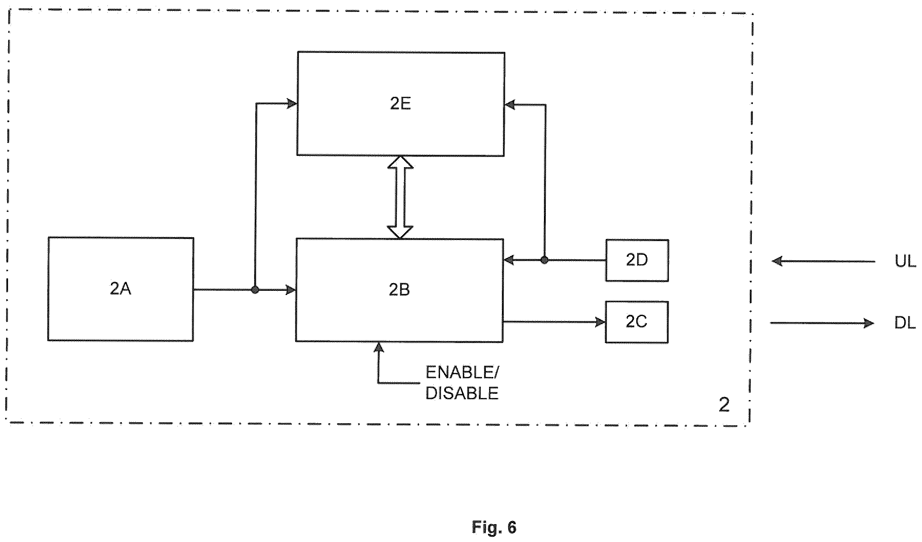

Fig. 6 shows a block diagram of an embodiment of a base station 2 within the wireless network. The base station 2 is adapted to compress signalling messages transmitted by the base station 2 on a signalling channel to mobile devices, wherein the mobile devices are associated with each other. The compression of the signalling messages is based on a built-up dictionary of collected signalling messages and the collected signalling messages are used as collected reference signalling messages.

As shown in Fig. 6, the base station 2 comprises in the shown embodiment a signalling message generation unit 2A being adapted to generate signalling messages. The base station 2 further comprises a signalling message compression/decompression unit 2B being adapted to compress signalling messages generated by the signalling message generation unit 2A, based on a built-up dictionary of collected reference signalling messages, in order to provide compressed signalling messages which are transmitted by a transmission unit 2C of the base station 2 in downlink, DL, direction on a signalling channel to associated mobile devices.

The signalling message compression/decompression unit 2B is further adapted to decompress compressed signalling messages received by a reception unit 2D of the base station 2 in uplink, UL, direction from mobile devices. The decompression is based on the built-up dictionary of collected reference signalling messages in order to provide the decompressed signalling messages which can be forwarded to a message processing unit.

In the shown embodiment of Fig. 6, the signalling message compression/decompression unit 2B has access to a dictionary memory 2E of the base station 2. The dictionary memory 2E can be, as shown in Fig. 2, integrated in the base station 2. It is also possible that the dictionary memory is stored in a remote memory to which the base station 2 has access via a data network. The dictionary memory 2E is adapted to store the built-up dictionary of the collected reference signalling messages. According to an embodiment, the dictionary memory 2E of the base station 2 comprises a downlink dictionary memory storing downlink signalling messages generated by the signalling message generation unit 2A, and an uplink dictionary memory storing uplink signalling messages received by the reception unit 2D of the base station 2. Accordingly, in this embodiment, the dictionary memory 2E is split into a downlink dictionary memory and an uplink dictionary memory. The downlink dictionary memory stores downlink signalling messages, whereas the uplink dictionary memory stores uplink signalling messages. Accordingly, more specific signalling messages can be used as reference signalling messages when compressing a downlink or uplink signalling message. This increases the performance of the method according to the present invention.

It is possible that the compression/decompression unit 2B can be enabled or disabled in response to an ENABLE/DISABLE control signal received from a control unit of a higher layer. Consequently, in a first mode the compression is performed whereas in a second mode no compression takes place. The control unit may monitor the signalling congestion in the wireless network and enable the compression/decompression unit if the signalling congestion exceeds a predetermined unit.

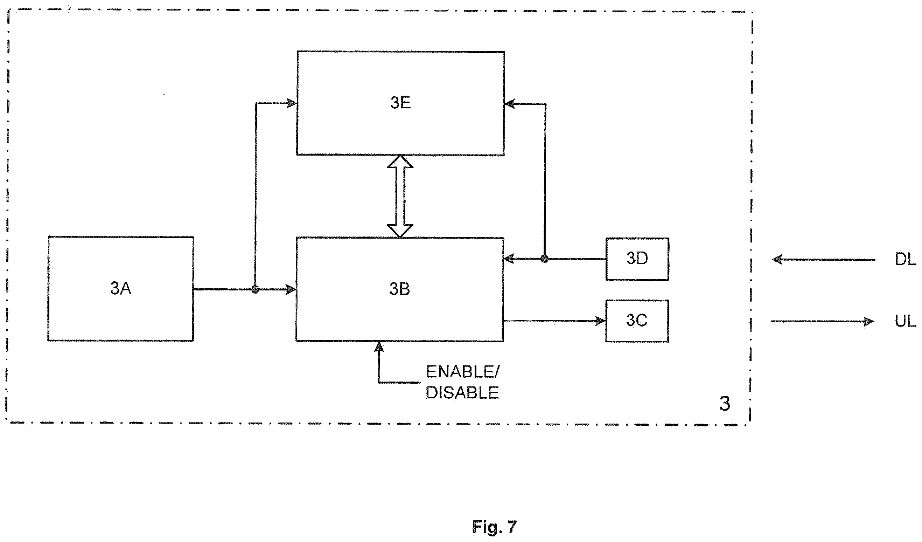

Fig. 7 shows a block diagram of an embodiment of the mobile device 3 within the wireless network. Similar to the base station 2 illustrated in Fig. 6, the mobile device 3 comprises a signalling message generation unit 3A being adapted to generate signalling messages. The mobile device 3 further comprises a signalling message compression/decompression unit 3B being adapted to compress signalling messages generated by the signalling message generation unit 3A, based on a built-up dictionary of collected reference signalling messages, in order to provide compressed signalling messages which are transmitted by a transmission unit 3C of the mobile device 3 in uplink direction on the signalling channel to the base station 2.

The signalling message compression/decompression unit 3B is further adapted to decompress compressed signalling messages received by a reception unit 3D of the mobile device 3 from a base station 2 based on the built-up dictionary of collected reference signalling messages in order to provide decompressed signalling messages. The signalling message generation unit 3A has access to a dictionary memory 3E storing the built-up dictionary. The dictionary memory 3E can be a local memory integrated in the mobile device 3. The dictionary memory 3E of the mobile device 3 comprises, according to an embodiment, a downlink dictionary memory storing downlink signalling messages received by the reception unit 3D of the mobile device 3, and an uplink dictionary memory storing uplink signalling messages generated by the signalling message generation unit 3A of the mobile device 3. It is possible that the compression/decompression unit 3B is also enabled or disabled in response to an ENABLE/DISABLE control signal received from a control unit of a higher layer to switch between operation modes.

The mobile device 3 illustrated in Fig. 7 can comprise a user equipment such as a mobile phone, a sensor device and/or an actuator device.

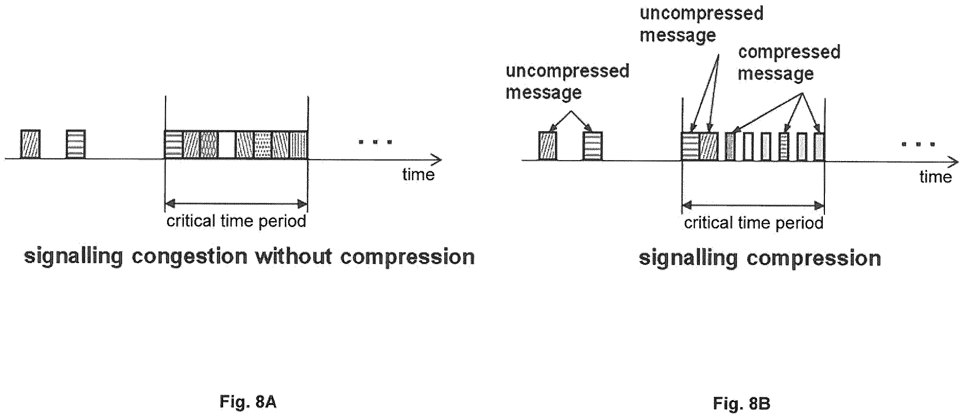

With the method according to the present invention, it is possible to remove redundancy in the signalling messages sent from or to multiple mobile devices. The method according to the present invention can effectively mitigate a signalling congestion in the wireless network and can further increase the capacity of the wireless network, as also illustrated in connection with Fig. 8. According to the method of the present invention, the mobile devices and the base station maintain a dictionary of reference signalling messages which can consist of signalling messages recently transferred in a signalling channel between the base stations and all associated mobile devices. The associations between the mobile devices can be determined by the characteristics of these mobile devices, including but not limited to proximity, device capability and service purpose. In case, that a new signalling message is to be transmitted, the signalling message is compressed at the transmitter side based on the built-up dictionary and reconstructed after transmission at the receiver side.

Figs. 8A and 8B show a situation of signalling congestion in a wireless network without the compression scheme, and with signalling compression performed according to the method of the present invention. In a wireless network, when a number of signalling requests or signalling messages arrive at the same time, i.e. during a critical time period, as illustrated in Fig. 8A, a signalling congestion does occur, if the demand of the total transfer rate exceeds the capacity of the signalling channel. In contrast, when using the compression method according to the present invention, the total information volume in the signalling channel can be significantly reduced and thus, the signalling congestion in the wireless network can be avoided, as shown in Fig. 8B. More specifically, as can be seen in Fig. 8B during the critical time period initially uncompressed messages are transmitted to the signalling channel, wherein the uncompressed signalling messages are collected as reference signalling messages to build up the dictionary of collected reference signalling messages. It is also possible to build up a dictionary before the critical time period on the basis of transmitted uncompressed messages. After the dictionary of collected reference signalling messages has been built up, the following signalling messages are compressed based on the dictionary of collected reference signalling messages during the critical time period, as illustrated in Fig. 8B.

The method according to the present invention can be applied to machine type communications as well as to human-centric communications. In machine type communication systems, there is generally a lower data rate, and packets with smaller packet size can be used. Data traffic in a machine type communication system is more uplink dominant and there are fewer interactions between the terminal devices and the other side, which is usually an application server employed for the machine type services. Such traffic characteristics have an impact on the design of the mobile and wireless system, in particular the requirements of the signalling channels. If the density of the terminal devices or mobile devices in the network increases to a certain degree, the signalling congestion can cause a severe problem that might lead to a breakdown of the network. In this scenario, the method according to the present invention can be suited to avoid such a signalling congestion in the wireless network.

According to the present invention, the signalling overhead can be reduced effectively. According to the specific example explained in context with Figs. 12 and 13, the achieved compression rate is:

$$\frac{1 + 6 \times 4 + 1 + (2 + 1) \times 4 + 1 + (2 + 1) \times 4 (bits)}{3 \times 6 \times 4 (bits)} = 70.8\%.$$

Since in many scenarios the downlink signalling messages often have a greater length, including for instance the radio resource assignment, etc., the expected compression ratio can even be higher.

The method according to the present invention can be suitable for massive machine type communications to release a bottleneck in the signalling channel. The mechanisms according to the present invention can be implemented both in the base station and mobile devices. The method according to the present invention can be used in any type of wireless networks.

**Claims**

1.  A method for mitigating signalling congestion in a wireless network, the method **characterised by**:

    building up (S1) a dictionary of collected signalling messages, the collected signalling messages being used as reference signalling messages, wherein, the collected signalling messages being transmitted on at least one signalling channel between at least one base station (2) and at least one device of a group of associated mobile devices (3-1), wherein the group comprises at least two mobile devices (3-1, 3-2), the dictionary is available to the group of associated mobile devices (3-1, 3-2) and the base station (2); and

    compressing (S2) signalling messages being transmitted on the at least one signalling channel or another signalling channel between the base station (2) and another mobile device (3-2) of the group, based on the dictionary of the collected reference signalling messages;

    wherein, in an uplink direction, for providing the dictionary of the collected reference signalling messages, a listening associated mobile device (3-2) listens to uplink reference signalling messages transmitted on the signalling channel from the associated mobile devices (3-1) to the base station (2), in order to store the acquired uplink reference signalling messages together with corresponding indices in a dictionary memory of the listening associated mobile device (3-2),

    wherein the base station (2) stores the same received uplink reference signalling messages with the same indices in a dictionary memory of the base station (2).

2.  The method according to claim 1, wherein the signalling messages are compressed on a transmitter side based on the dictionary of the collected reference signalling messages; and the signalling messages are reconstructed on a receiver side based on the dictionary of the collected reference signalling messages.

3.  The method according to claim 1 or claim 2, wherein the reference signalling messages are collected within a predetermined time period and indexed.

4.  The method according to claim 3, wherein the collected reference signalling messages are indexed according to a transmission order of the reference signalling messages or according to time stamps of the reference signalling messages, each time stamp indicating a time when the respective reference signalling message has been transmitted.

5.  The method according to one of the preceding claims 1 to 4, wherein the dictionary of the collected reference signalling messages comprises indexed codewords being extracted from previously transmitted signalling messages, the previously transmitted signalling messages addressing a set of the group of associated mobile devices (3).

6.  The method according to one of the preceding claims 1 to 5, wherein the group of associated mobile devices (3) have a concrete relationship comprising their current location in a proximate area and/or their respective device capabilities and/or their respective service purposes.

7.  The method according to one of the preceding claims 1 to 6, wherein, in a downlink direction, for providing the dictionary of the collected reference signalling messages, the reference signalling messages being transmitted on a broadcast or multicast signalling channel from the base station (2) to the associated mobile devices (3) are received by the associated mobile devices (3) and stored with corresponding indices both in a dictionary memory of the transmitting base station (2) and in dictionary memories of the receiving associated mobile devices (3).

8. The method according to one of the preceding claims 1 to 7, wherein the dictionary of the collected reference signalling messages is continuously updated.

9. The method according to claim 1, wherein, in a downlink direction from the base station (2) to the associated mobile devices (3), the base station (2) transmits compressed and uncompressed signalling messages at the same time on a broadcast or multicast signalling channel to the associated mobile devices (3), wherein the compressed signalling messages are compressed on the basis of the dictionary built-up from the uncompressed signalling messages.

10. The method according to claim 9, wherein the signalling messages are compressed at the transmitter side using the uncompressed signalling messages as a reference and transmitted as compressed signalling messages to the associated mobile devices (3), and wherein the compressed signalling messages received by the associated mobile devices (3) are decompressed at the receiver side using the received uncompressed signalling messages as a reference.

11. A mobile device (3-2) of a wireless network (1), the mobile device (3-2) **characterised by** being adapted to compress signalling messages being transmitted by the mobile device (3-2) to a base station (2) on a signalling channel, based on a built-up dictionary of collected signalling messages, the collected signalling messages being used as collected reference signalling messages, and the signalling messages being transmitted on a signalling channel between the base station (2) and the mobile device (3-2),
the collected signalling messages being transmitted on a signalling channel between the base station and at least one other mobile device (3-1), the mobile device and the at least one other mobile device being associated in a group, wherein, in an uplink direction, for providing the dictionary of the collected reference signalling messages, the mobile device (3-2) listens to uplink reference signalling messages transmitted on the signalling channel from the at least one other mobile device (3-1) to the base station (2), in order to store the acquired uplink reference signalling messages together with corresponding indices in a dictionary memory of the mobile device (3-2).


**Patentansprüche**

1. Verfahren zum Mindern von Signalstauung in einem drahtlosen Netzwerk, wobei das Verfahren **gekennzeichnet ist durch**:

   Aufbauen (S1) eines Wörterbuchs gesammelter Signalnachrichten, wobei die gesammelten Signalnachrichten als Referenzsignalnachrichten verwendet werden, wobei die gesammelten Signalnachrichten auf mindestens einem Signalkanal zwischen mindestens einer Basisstation (2) und mindestens einem Gerät einer Gruppe zugeordneter mobiler Geräte (3-1) gesendet werden, wobei die Gruppe mindestens zwei mobile Geräte (3-1, 3-2) umfasst, wobei das Wörterbuch der Gruppe zugeordneter mobiler Geräte (3-1, 3-2) und der Basisstation (2) verfügbar ist; und
   Komprimieren (S2) von Signalnachrichten, die auf dem mindestens einen Signalkanal oder einem anderen Signalkanal zwischen der Basisstation (2) und einem anderen mobilen Gerät (3-2) der Gruppe gesendet werden, auf Grundlage des Wörterbuchs der gesammelten Referenzsignalnachrichten;
   wobei in einer Uplinkrichtung, zum Bereitstellen des Wörterbuchs der gesammelten Referenzsignalnachrichten, ein mithörendes, zugeordnetes mobiles Gerät (3-2) die Uplink-Referenzsignalnachrichten, die auf dem Signalkanal von den zugeordneten mobilen Geräten (3-1) an die Basisstation (2) gesendet werden, abhört, um die erhaltenen Uplink-Referenzsignalnachrichten zusammen mit entsprechenden Indizes in einem Wörterbuchspeicher des mithörenden zugeordneten mobilen Geräts (3-2) zu speichern,
   wobei die Basisstation (2) die gleichen empfangenen Uplink-Referenzsignalnachrichten mit den gleichen Indizes in einem Wörterbuchspeicher der Basisstation (2) speichert.

2. Verfahren nach Anspruch 1, wobei die Signalnachrichten auf einer Senderseite auf Grundlage des Wörterbuchs der gesammelten Referenzsignalnachrichten komprimiert werden; und die Signalnachrichten auf einer Empfängerseite auf Grundlage des Wörterbuchs der gesammelten Referenzsignalnachrichten rekonstruiert werden.

3. Verfahren nach Anspruch 1 oder Anspruch 2, wobei die Referenzsignalnachrichten innerhalb eines vorbestimmten Zeitraums gesammelt und indexiert werden.

**4.** Verfahren nach Anspruch 3, wobei die gesammelten Referenzsignalnachrichten gemäß einer Sendereihenfolge der Referenzsignalnachrichten oder gemäß Zeitstempeln der Referenzsignalnachrichten indexiert werden, wobei jeder Zeitstempel eine Zeit angibt, zu der die jeweilige Referenzsignalnachricht gesendet wurde.

**5.** Verfahren nach einem der vorstehenden Ansprüche 1 bis 4, wobei das Wörterbuch der gesammelten Referenzsignalnachrichten indexierte Codewörter umfasst, die aus zuvor gesendeten Signalnachrichten extrahiert werden, wobei die vorher gesendeten Signalnachrichten einen Satz der Gruppe zugeordneter mobiler Geräte (3) adressieren.

**6.** Verfahren nach einem der vorstehenden Ansprüche 1 bis 5, wobei die Gruppe zugeordneter mobiler Geräte (3) eine konkrete Beziehung, ihre derzeitige Position in einem naheliegenden Bereich und/oder ihre jeweiligen Gerätefähigkeiten und/oder ihre jeweiligen Dienstzwecke umfassend, aufweisen.

**7.** Verfahren nach einem der vorstehenden Ansprüche 1 bis 6, wobei in einer Downlinkrichtung, zum Bereitstellen des Wörterbuchs der gesammelten Referenzsignalnachrichten, wobei die Referenzsignalnachrichten, die auf einem Sende- oder Multicast-Signalkanal von der Basisstation (2) an die zugeordneten mobilen Geräte (3) gesendet werden, von den zugeordneten mobilen Geräten (3) empfangen und mit entsprechenden Indizes sowohl in einem Wörterbuchspeicher der sendenden Basisstation (2) als auch in Wörterbuchspeichern der empfangenden zugeordneten mobile Geräte (3) gespeichert werden.

**8.** Verfahren nach einem der vorstehenden Ansprüche 1 bis 7, wobei das Wörterbuch der gesammelten Referenzsignalnachrichten kontinuierlich aktualisiert wird.

**9.** Verfahren nach Anspruch 1, wobei in einer Downlinkrichtung von der Basisstation (2) zu den zugeordneten mobilen Geräten (3) die Basisstation (2) komprimierte und nichtkomprimierte Signalnachrichten zur gleichen Zeit auf einem Sende- oder Multicast-Signalkanal an die zugeordneten mobilen Geräte (3) sendet, wobei die komprimierten Signalnachrichten auf Basis des Wörterbuchaufbaus aus den nichtkomprimierten Signalnachrichten komprimiert werden.

**10.** Verfahren nach Anspruch 9, wobei die Signalnachrichten auf der Senderseite unter Verwendung der nichtkomprimierten Signalnachrichten als eine Referenz komprimiert und als komprimierte Signalnachrichten an die zugeordneten mobilen Geräte (3) gesendet werden, und wobei die komprimierten Signalnachrichten, die von den zugeordneten mobilen Geräten (3) empfangen werden, auf der Empfängerseite unter Verwendung der empfangenen nichtkomprimierten Signalnachrichten als eine Referenz dekomprimiert werden.

**11.** Mobile Gerät (3-2) eines drahtlosen Netzwerks (1), wobei das mobile Gerät (3-2) **dadurch gekennzeichnet ist, dass** es dafür ausgelegt ist, Signalnachrichten, die von dem mobilen Gerät (3-2) an eine Basisstation (2) auf einem Signalkanal gesendet werden, auf Grundlage eines Aufbauwörterbuchs gesammelter Signalnachrichten zu komprimieren, wobei die gesammelten Signalnachrichten als gesammelte Referenzsignalnachrichten verwendet werden, und die Signalnachrichten auf einem Signalkanal zwischen der Basisstation (2) und dem mobilen Gerät (3-2) gesendet werden, wobei die gesammelten Signalnachrichten auf einem Signalkanal zwischen der Basisstation und mindestens einem anderen mobilen Gerät (3-1) gesendet werden, wobei das mobile Gerät und das mindestens eine andere mobile Gerät in einer Gruppe zugeordnet sind; wobei in einer Uplinkrichtung, zum Bereitstellen des Wörterbuchs der gesammelten Referenzsignalnachrichten, das mobile Gerät (3-2) Uplink-Referenzsignalnachrichten, die auf dem Signalkanal von dem mindestens einen anderen mobilen Gerät (3-1) an die Basisstation (2) gesendet werden, abhört, um die erhaltenen Uplink-Referenzsignalnachrichten zusammen mit entsprechenden Indizes in einem Wörterbuchspeicher des mobilen Geräts (3-2) zu speichern.

## Revendications

**1.** Procédé d'atténuation d'un encombrement de signalisation dans un réseau sans fil, le procédé étant **caractérisé par** les étapes suivantes :

élaboration (S1) d'un dictionnaire de messages de signalisation collectés, les messages de signalisation collectés étant utilisés comme messages de signalisation de référence, les messages de signalisation collectés étant transmis sur au moins un canal de signalisation entre au moins une station de base (2) et au moins un dispositif d'un groupe de dispositifs mobiles associés (3-1), le groupe comprenant au moins deux dispositifs mobiles (3-1, 3-2), le dictionnaire étant mis à la disposition du groupe de dispositifs mobiles associés (3-1, 3-2) et de la station de base (2) ; et

compression (S2) de messages de signalisation transmis sur l'au moins un canal de signalisation ou un autre canal de signalisation entre la station de base (2) et un autre dispositif mobile (3-2) du groupe, en fonction du dictionnaire des messages de signalisation de référence collectés ;

dans lequel, dans un sens montant, aux fins de produire le dictionnaire des messages de signalisation de référence collectés, un dispositif mobile associé scrutateur (3-2) scrute des messages de signalisation de référence montants transmis sur le canal de signalisation depuis les dispositifs mobiles associés (3-1) vers la station de base (2) dans le but de stocker les messages de signalisation de référence montants acquis, conjointement avec des index correspondants, dans une mémoire de dictionnaires du dispositif mobile associé scrutateur (3-2),

dans lequel la station de base (2) stocke les mêmes messages de signalisation de référence montants reçus avec les mêmes index dans une mémoire de dictionnaires de la station de base (2).

2. Procédé selon la revendication 1, dans lequel les messages de signalisation sont compressés d'un côté émission en fonction du dictionnaire des messages de signalisation de référence collectés ; et les messages de signalisation sont reconstitués d'un côté réception en fonction du dictionnaire des messages de signalisation de référence collectés.

3. Procédé selon la revendication 1 ou la revendication 2, dans lequel les messages de signalisation de référence sont collectés au sein d'un intervalle de temps prédéfini et indexés.

4. Procédé selon la revendication 3, dans lequel les messages de signalisation de référence collectés sont indexés selon un ordre de transmission des messages de signalisation de référence ou selon des estampilles temporelles des messages de signalisation de référence, chaque estampille temporelle indiquant un temps où le message de signalisation de référence respectif a été transmis.

5. Procédé selon l'une des revendications 1 à 4 précédentes, dans lequel le dictionnaire des messages de signalisation de référence collectés comprend des mots de code indexés extraits de messages de signalisation transmis précédemment, les messages de signalisation transmis précédemment s'adressant à un ensemble du groupe de dispositifs mobiles associés (3).

6. Procédé selon l'une des revendications 1 à 5 précédentes, dans lequel le groupe de dispositifs mobiles associés (3) entretiennent une relation concrète comprenant leur emplacement actuel dans une zone proche et/ou leurs capacités de dispositif respectives et/ou leurs finalités de service respectives.

7. Procédé selon l'une des revendications 1 à 6 précédentes, dans lequel, dans un sens descendant, aux fins de produire le dictionnaire des messages de signalisation de référence collectés, les messages de signalisation de référence transmis sur un canal de signalisation en diffusion large ou en multidiffusion depuis la station de base (2) vers les dispositifs mobiles associés (3) sont reçus par les dispositifs mobiles associés (3) et stockés, avec des index correspondants, à la fois dans la mémoire de dictionnaires de la station de base émettrice (2) et dans des mémoires de dictionnaires des dispositifs mobiles associés récepteurs (3).

8. Procédé selon l'une des revendications 1 à 7 précédentes, dans lequel le dictionnaire des messages de signalisation de référence collectés est continuellement mis à jour.

9. Procédé selon la revendication 1, dans lequel, dans un sens descendant depuis la station de base (2) vers les dispositifs mobiles associés (3), la station de base (2) transmet simultanément des messages de signalisation compressés et non compressés sur un canal de signalisation en diffusion large ou en multidiffusion vers les dispositifs mobiles associés (3), les messages de signalisation compressés étant compressés sur la base du dictionnaire élaboré à partir des messages de signalisation non compressés.

10. Procédé selon la revendication 9, dans lequel les messages de signalisation sont compressés du côté émission en utilisant comme référence les messages de signalisation non compressés et sont transmis sous forme de messages de signalisation compressés vers les dispositifs mobiles associés (3), et dans lequel les messages de signalisation compressés reçus par les dispositifs mobiles associés (3) sont décompressés du côté réception en utilisant comme référence les messages de signalisation non compressés reçus.

**11.** Dispositif mobile (3-2) d'un réseau sans fil (1), le dispositif mobile (3-2) étant **caractérisé en ce qu'**il est adapté à compresser des messages de signalisation transmis par le dispositif mobile (3-2) vers une station de base (2) sur un canal de signalisation, en fonction d'un dictionnaire élaboré de messages de signalisation collectés, les messages de signalisation collectés étant utilisés comme messages de signalisation de référence collectés, et les messages de signalisation étant transmis sur un canal de signalisation entre la station de base (2) et le dispositif mobile (3-2), les messages de signalisation collectés étant transmis sur un canal de signalisation entre la station de base et au moins un autre dispositif mobile (3-1), le dispositif mobile et l'au moins un autre dispositif mobile étant associés dans un groupe ;

dans lequel, dans un sens montant, aux fins de produire le dictionnaire des messages de signalisation de référence collectés, le dispositif mobile (3-2) scrute des messages de signalisation de référence montants transmis sur le canal de signalisation depuis l'au moins un autre dispositif mobile (3-1) vers la station de base (2) dans le but de stocker les messages de signalisation de référence montants acquis, conjointement avec des index correspondants, dans une mémoire de dictionnaires du dispositif mobile (3-2).

Fig. 1

EP 3 039 898 B1

Fig. 2

Fig. 3

Fig. 4

S1

S2

Fig. 5

Fig. 6

DL

UL

3

3D

3C

3E

3B

3A

ENABLE/
DISABLE

Fig. 7

**Fig. 8A**

signalling congestion without compression

critical time period

time

uncompressed
message

uncompressed
message

compressed
message

signalling compression

critical time period

time

**Fig. 8B**

EP 3 039 898 B1

Uplink signalling messages from mobile device 3-1 to base station 2

Uplink signalling messages listened by mobile device 3-2

3-1

3-2

base station

2

Fig. 9

| Index | 1st code word (Transaction-Identifier) | 2nd code word (PLMN-ID) | 3rd code word (MME-ID) | ... |
|---|---|---|---|---|
| 11 | 823761 | 322340 | 076812 | |
| ... | ... | ... | ... | |
| ... | ... | ... | ... | |
| ... | ... | ... | ... | |
| ... | ... | ... | ... | |

Uplink signalling messages from mobile device 3-1

**Fig. 10**

Fig. 11A

Fig. 11B

**Dictionary**

|  | 1st code word | 2nd code word | 3rd code word |  |
|---|---|---|---|---|
| Index | (Transaction-Identifier) | (PLMN-ID) | (MME-ID) | ... |
| 11 | 823761 | 322340 | **076812** | |
| 62 | 661178 | **829521** | 092718 | |

**Source message to be transmitted**

| 778854 | 829521 | 076812 | |
|---|---|---|---|

**Fig. 12**

uncompressed code word

Index of entry 62

Index of entry 11

message after compression

| 0 | 778854 | 1 | 62 | 2 | 1 | 11 | 3 | | | |

1 bit to denote the uncompressed code word

2nd code word of entry 62

3rd code word of entry 11

1 bit to denote the compressed code word

Fig. 13

Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1134900 A1
- WO 0072550 A1
- US 6061366 A